# EUROPÄISCHE PATENTSCHRIFT

(11) **EP 3 291 172 B1**
(45) Veröffentlichungstag und Bekanntmachung des Hinweises auf die Patenterteilung: **11.03.2020**
(21) Anmeldenummer: 17188379.6
(22) Anmeldetag: 29.08.2017
(51) Int. Cl.: G06T 5/00

(54) **VERFAHREN ZUR ERMITTLUNG VON ERGEBNISBILDDATEN**
METHOD FOR CALCULATING FINAL IMAGE DATA
PROCÉDÉ DE DÉTERMINATION DE DONNÉES D'IMAGE DE RÉSULTAT

(30) Priorität: 06.09.2016 DE 102016216795
(43) Veröffentlichungstag der Anmeldung: 07.03.2018
(73) Patentinhaber: AUDI AG, 85045 Ingolstadt (DE)
(72) Erfinder: Bruns, Erich, 85053 Ingolstadt (DE); Jarvers, Christian, 86159 Augsburg (DE)

(56) Entgegenhaltungen:
- US-A1- 2014 153 819
- US-A1- 2015 178 591
- EIGEN DAVID ET AL: "Restoring an Image Taken through a Window Covered with Dirt or Rain", 2013 IEEE INTERNATIONAL CONFERENCE ON COMPUTER VISION, IEEE, 1. Dezember 2013 (2013-12-01), Seiten 633-640, XP032572988, ISSN: 1550-5499, DOI: 10.1109/ICCV.2013.84 [gefunden am 2014-02-28]

## Beschreibung

Die Erfindung betrifft ein Verfahren zur Ermittlung von Ergebnisbilddaten, wobei durch einen bildgebenden Sensor Rohbilddaten erfasst werden, wonach diese durch einen Verarbeitungsalgorithmus zur Qualitätsverbesserung weiterverarbeitet werden, um die Ergebnisbilddaten zu ermitteln, wobei der Verarbeitungsalgorithmus durch mehrere Verarbeitungsparameter parametrisiert wird, die ermittelt werden, indem der Verarbeitungsalgorithmus durch mehrere Trainingsdatensätze im Rahmen eines Maschinenlernens trainiert wird, wobei die Trainingsdatensätze jeweils ein Eingangsbild und ein Referenzbild umfassen, wobei im Rahmen des Maschinenlernens ein Maß für die Abweichung von Verarbeitungsbildern, die durch Anwenden des Verarbeitungsalgorithmus auf das Eingangsbild eines jeweiligen Trainingsdatensatzes ermittelt werden, von den jeweiligen Referenzbildern minimiert wird.

Es sind eine Vielzahl von Fahrerassistenzfunktionen bekannt, die Bilddaten, insbesondere Kameradaten, auswerten, um beispielsweise Fahreingriffe durchzuführen oder einen Fahrer durch Fahrhinweise oder Warnungen zu unterstützen. Problematisch ist hierbei, dass die Leistungsfähigkeit dieser Fahrerassistenzfunktionen unmittelbar von der Bildqualität der Sensordaten abhängt. Werden beispielsweise Bilddaten einer Kamera ausgewertet, die auf Licht im sichtbaren Spektrum angewiesen ist, ist es möglich, dass bei Nachtfahrten keine ausreichende Bildqualität erzielt wird, womit entsprechende Fahrerassistenzfunktionen nicht oder nur eingeschränkt bereitstehen.

Eine mögliche Gegenmaßnahme ist es, die "Belichtungszeit" des entsprechenden Sensors zu erhöhen, also beispielsweise Signale über einen längeren Zeitraum zu integrieren. Hierbei kann jedoch das Bildrauschen steigen, was die Bildqualität wiederum negativ beeinflusst, und es können Bewegungsunschärfen aufgrund von Bewegungen auftreten. Es kann zudem nicht beliebig lange belichtet werden, da für viele Fahrerassistenzfunktionen eine ausreichend schnelle Bildgebung erforderlich ist. Zudem können längere Belichtungszeiten nicht gegen weitere Probleme der Bildgebung helfen, die systembedingt bei bestimmten Sensoren auftreten, beispielsweise eine Farbverfälschung oder ein relativ niedriger Signal-zu-Rausch-Abstand.

Für einzelne Fahrassistenzfunktionen bzw. bestimmte Einsatzbedingungen einer entsprechenden Sensorik ist es möglich, Bilder durch digitale Verfahren nachzubearbeiten, um eine anschließende Bildanalyse zu verbessern. Beispielsweise können Kanten geschärft werden und/oder das Bild kann weichgezeichnet werden. Entsprechende digitale Nachbesserungen mit vorgegebenen Filtern führen jedoch typischerweise gleichzeitig dazu, dass andere Qualitätsmerkmale des Bilds verschlechtert werden. Beispielsweise wird durch ein Weichzeichnen die Schärfe reduziert und ein Schärfen von Kanten kann zu Bildartefakten führen. Somit kann eine entsprechende Vorverarbeitung des Bildes typischerweise nicht allgemein für eine Vielzahl von Fahrsituationen und/oder Fahrerassistenzfunktionen genutzt werden.

Es ist bekannt, neuronale Netze zu nutzen, die vorangehend angelernt wurden, um bestimmte Klassifizierungs- oder Erkennungsaufgaben für einzelne Fahrerassistenzsysteme durchzuführen. Beispielsweise ist es aus der Druckschrift DE 10 2015 209 822 A1 bekannt, ein Eingangsbild derart zu klassifizieren, dass ein Klassifikationsergebnis ein Vorhandensein einer Person in dem Eingangsbild zeigt und ein Regressionsergebnis die Position der Person in dem Eingangsbild. Hierzu wird ein Neuronalnetzwerkverarbeitungsabschnitt einer Erfassungseinrichtung genutzt, der auf Grundlage eines Lernprozesses unter Verwendung einer Vielzahl von positiven und negativen Mustern parametrisiert wird.

Die Druckschrift DE 10 2006 045 417 A1 lehrt hingegen Bilder der Umgebung eines Fahrzeugs zu erfassen und Strukturen mittels einer Mustererkennung zu isolieren. Diese werden mit gespeicherten Strukturen verglichen, wobei im Rahmen dieses Vergleichs ein neuronales Netz verwendet werden kann.

Die geschilderten Ansätze zur Nutzung von neuronalen Netzen im Rahmen der Bilddatenverarbeitung sind insoweit problematisch, dass sie einen relativ aufwendigen Lernvorgang erfordern. Es ist in den beschriebenen Fällen jeweils erforderlich, Trainingsdatensätze bereitzustellen, die manuell klassifiziert wurden. Zudem betrifft das Training jeweils eine spezifische Fahrerassistenzfunktion, womit jede einzelne Fahrerassistenzfunktion separat trainiert werden muss. Dies erhöht den Aufwand zur Entwicklung neuer Fahrerassistenzfunktionen bzw. zur Weiterentwicklung von Fahrerassistenzfunktionen erheblich.

Aus dem Artikel D. Eigen et al., "Restoring an Image Taken through a Window Covered with Dirt or Rain", 2013 IEEE INTERNATIONAL CONFERENCE ON COMPUTER VISION, IEEE, 01.12.2013, S. 633 bis 640, sowie aus der Druckschrift US 2015/0 178 591 A1 ist ein Verfahren zur Bildverbesserung eines durch eine Scheibe aufgenommenen Bildes bekannt. Hierbei werden Bildeinflüsse durch auf der Scheibe haftenden Schmutz oder Regen durch ein entsprechend trainiertes neuronales Netz aus den Bilddaten herausgerechnet. Trainingsdaten für das Herausrechnen von Schmutz werden dadurch generiert, dass zunächst Bilddaten ohne Verschmutzung aufgenommen werden und deren Bildqualität durch eine simulierte Verschmutzung reduziert wird. Trainingsdaten zum Herausrechnen von Wassertropfen können bereitgestellt werden, in dem nacheinander mit der gleichen Kamera Bilder einer Szene aufgenommen werden, wobei zwischen den Aufnahmen Wasser auf eine vor der Kamera befindliche Scheibe aufgebracht bzw. eine saubere Glasplatte durch eine mit Wasser besprühte Glasplatte ersetzt wird.

Der Erfindung liegt somit die Aufgabe zugrunde, die Nutzbarkeit von bildbasierten Fahrerassistenzfunktionen durch einen gemeinsamen, für eine Vielzahl von Fahrerassistenzfunktionen nutzbaren Ansatz weiter zu verbessern.

Die Aufgabe wird dadurch gelöst, dass für wenigstens einen der Trainingsdatensätze die Bilddaten des Referenzbildes mit einem Referenzsensor und die Bilddaten des Eingangsbildes mit einem starr mit dem Referenzsensor gekoppelten Vergleichssensor aufgenommen werden, wobei entweder das Eingangsbild und das Referenzbild die gleiche Szene aus der gleichen Perspektive abbilden, oder wobei der Vergleichssensor und der Referenzsensor von einander unterschiedliche Optiken nutzen, wobei die erfassten Bildbereiche parallel zueinander verschoben sind, wobei dies im Rahmen der Nutzung und/oder der Bereitstellung der Trainingsdatensätze dadurch kompensiert wird, dass das Eingangsbild und/oder das Referenzbild derart beschnitten werden, dass der gleiche Abbildungsbereich dargestellt wird.

Erfindungsgemäß wird somit vorgeschlagen, ein Verfahren des Maschinenlernens bereits früh in der Verarbeitungskette zu nutzen, nämlich bereits zur Qualitätsverbesserung von Rohbilddaten. Ein großer Vorteil bei der Nutzung von Verfahren des Maschinenlernens ist es, dass es nicht erforderlich ist, manuell bestimmte Verarbeitungsregeln vorzugeben, um die Bildqualität zu verbessern. Entsprechende Verarbeitungsparameter können automatisch im Rahmen des Maschinenlernens erlernt werden. Da unmittelbar die Qualität der Bilddaten verbessert wird, kommt diese Verbesserung einerseits jedem Fahrerassistenzsystem zugute, dass Bilddaten nutzt. Andererseits kann das erfindungsgemäße Verfahren auch in einer Vielzahl von anderen Einsatzbereichen genutzt werden, um für einen Benutzer visualisierte oder im Rahmen einer Weiterverarbeitung genutzte Bilddaten qualitativ zu verbessern.

Der bildgebende Sensor kann insbesondere eine Kamera sein. Die Qualitätsverbesserung kann in diesem Fall insbesondere dazu dienen, eine ungünstige Beleuchtungssituation, insbesondere eine Unterbelichtung, zumindest teilweise zu kompensieren. Das erfindungsgemäße Verfahren ist jedoch auch auf andere bildgebende Sensoren übertragbar, beispielsweise bildgebende Radar- oder Lidarsensoren oder Laserscanner.

In dem erfindungsgemäßen Verfahren werden Trainingsdatensätze verwendet, die jeweils ein Eingangsbild und ein Referenzbild umfassen, wobei im Rahmen des Maschinenlernens ein Maß für die Abweichung von Verarbeitungsbildern, die durch Anwenden des Verarbeitungsalgorithmus auf das Eingangsbild eines jeweiligen Trainingsdatensatzes ermittelt werden, von den jeweiligen Referenzbildern minimiert wird. Als Maß für den Unterschied zwischen dem jeweiligen Verarbeitungsbild und dem Referenzbild kann eine Kostenfunktion definiert werden. Diese kann von mehreren separat berechneten Abständen abhängen, die jeweils zwischen einem Pixel bzw. einer Gruppe von Pixeln des Referenzbildes und einem Pixel bzw. einer Gruppe von Pixeln des Verarbeitungsbildes ermittelt werden. Vorzugsweise weisen das Verarbeitungsbild und das Referenzbild eine gleiche Bildauflösung auf, womit die Abstände jeweils pixelbasiert berechnet werden können. Beispielsweise kann der Abstand im Falle eines Monochrombildes ein Intensitätsunterschied zwischen einem Pixel im Referenzbild und dem zugeordneten Pixel im Verarbeitungsbild sein. Bei farbigen Bildern können separate Abstände für die einzelnen Farbkanäle berücksichtigt werden oder der Farbraum kann anderweitig parametrisiert werden. Die Kostenfunktion kann in Abhängigkeit dieser Abstände in Form einer Metrik bzw. Norm berechnet werden. Beispielsweise kann eine 1-Norm, eine sogenannte Manhattan-Norm, oder eine 2-Norm, eine sogenannte Euklidische-Norm verwendet werden. Bei einer 1-Norm werden die einzelnen Abstände addiert, um zur Kostenfunktion zu gelangen. Bei einer 2-Norm werden die Quadrate der Abstände summiert und die Kostenfunktion wird als Wurzel dieser Summe berechnet.

Die Minimierung der Kostenfunktion erfolgt durch eine Variation der Verarbeitungsparameter. Dieser Ansatz ist aus dem Bereich der neuronalen Netzwerke bekannt und wird dort Fehlerrückführung oder Backpropagation of Error genannt. Allgemein kann ein Gradientenverfahren genutzt werden, bei dem eine Ableitung der Kostenfunktion bzw. des Maßes für die Abweichung bezüglich der Verarbeitungsparameter berechnet wird, um eine Variationsrichtung für die Verarbeitungsparameter zu ermitteln. Hierbei handelt es sich um einen bekannten Optimierungsansatz, der nicht im Detail erläutert werden soll.

Im erfindungsgemäßen Verfahren ist es vorteilhaft, wenn das Eingangsbild und das Referenzbild die gleiche Szene aus der gleichen Perspektive abbilden. Unter einer gleichen Szene ist hierbei eine Abbildung des gleichen Bildbereiches zum im Wesentlichen gleichen Zeitpunkt zu verstehen. Abweichungen in der Abbildungszeit können sich beispielsweise aus unterschiedlichen Belichtungszeiten des Eingangs- und des Referenzbildes ergeben. Das Eingangsbild und das Referenzbild sollten somit den gleichen Inhalt haben, wobei das Eingangsbild diesen Inhalt mit einer geringeren Qualität als das Referenzbild abbilden kann.

Jedes Referenzbild kann sich von dem Eingangsbild des gleichen Trainingsdatensatzes bezüglich der Schärfe der Abbildung wenigstens eines Objekts und/oder eines Bildrauschens und/oder eines Kontrasts unterscheiden. Wie eingangs ausgeführt, ist ein wesentlicher Einsatzzweck des erfindungsgemäßen Verfahrens eine Verbesserung der Bildqualität von Bilddaten mit mangelhafter Ausleuchtung. Ist die Szene bei gegebener Lichtempfindlichkeit des Sensors und Integrationszeit zu gering ausgeleuchtet, führt dies dazu, dass nicht der gesamte Dynamikbereich des Sensors genutzt wird. Stehen beispielsweise 8 Bit für die Helligkeit bzw. für eine bestimmte Farbe zur Verfügung und ist die Ausleuchtung der Szene sehr gering, ist es möglich, dass nur drei oder vier Bit tatsächlich genutzt werden. Dies führt zunächst zu einer Verringerung des Kontrasts. Wird dieser durch eine Skalierung der Messdaten erhöht, resultiert ein erhöhtes Quantisierungsrauschen. In einigen Fällen kann es möglich sein, die Empfindlichkeit des Sensors zu erhöhen, wobei dies zu einem höheren Sensorrauschen führen kann. Wird die Belichtungszeit erhöht, kann eine Bewegungsunschärfe von bewegten Objekten auftreten oder sich erhöhen. Die Abweichungen zwischen Eingangsbild und Referenzbild können somit typische Qualitätsunterschiede bei einer Unterbelichtung repräsentieren und somit eben jene Qualitätsmängel, die im Rahmen des erfindungsgemäßen Verfahrens zumindest teilweise kompensiert werden sollen. Die Trainingsdatensätze dienen somit dazu, den Verarbeitungsalgorithmus derart zu parametrisieren, dass derartige Qualitätsmängel zumindest teilweise kompensiert werden können.

In dem erfindungsgemäßen Verfahren werden für wenigstens einen der Trainingsdatensätze die Bilddaten des Referenzbildes mit einem Referenzsensor und die Bilddaten des Eingangsbildes mit einem starr mit dem Referenzsensor gekoppelten Vergleichssensor aufgenommen. Der Vergleichssensor kann hierbei insbesondere baugleich zu dem bildgebenden Sensor sein. Als Referenzsensor kann ein Sensor genutzt werden, der bei gleichen Erfassungsbedingungen eine qualitativ höherwertige Bilddatenerfassung ermöglicht. Bei einer Verwendung von Trainingsdatensätzen, die entsprechende Referenz- und Eingangsbilder umfassen, wird der Verarbeitungsalgorithmus demnach darauf trainiert, Bilddaten des Vergleichssensors derart zu verarbeiten, dass sie den Bilddaten des Referenzsensors möglichst weitgehend ähneln. Ermöglicht der Referenzsensor eine qualitativ höherwertige Bilderfassung, wird somit eine Verarbeitungsfunktion bereitgestellt, die Bilddaten des Vergleichssensors und somit insbesondere Bilddaten eines baugleichen bildgebenden Sensors qualitativ verbessern kann.

Es ist in vielen Fällen zweckmäßig, Bilddaten in dem erfindungsgemäßen Verfahren durch einen bildgebenden Sensor aufzunehmen, der keine optimale Qualität bereitstellen kann. Beispielsweise kann es gewünscht sein, einen bildgebenden Sensor zu nutzen, der besonders günstig und/oder besonders kleinbauend ist. Zudem kann es erforderlich sein, dass, beispielsweise bei einer Nutzung im Kraftfahrzug, bestimmte Zulassungsanforderungen erfüllt werden müssen, die unter Umständen für Sensoren, die eine höhere Bildqualität ermöglichen würden, noch nicht erfüllt sind. Entsprechende Einschränkungen liegen für den Referenzsensor nicht vor, da dieser nur zum Training des Verarbeitungsalgorithmus erforderlich ist und somit beispielsweise bei einer Nutzung des erfindungsgemäßen Verfahrens in einem Kraftfahrzeug nicht in jedes Kraftfahrzeug integriert werden muss. Somit kann beispielsweise eine größere Sensorfläche genutzt werden, es kann eine Kühlung des Sensorchips erfolgen, um das Bildrauschen zu reduzieren, oder Ähnliches.

Alternativ wäre es auch möglich, zur Ermittlung der Bilddaten des Eingangsbildes einen Vergleichssensors zu nutzen, bei dem eine zugeordnete Optik oder der Sensor selbst derart modifiziert wurde, dass die Bildqualität des Eingangsbildes gezielt verschlechtert wird. Beispielsweise können gezielt eine Lichtempfindlichkeit des Vergleichssensors bzw. ein Lichteinfall auf diesen reduziert werden, um eine Bilddatenerfassung bei einer schlechteren Ausleuchtung des Bildes zu simulieren.

Der Vergleichssensor und der Referenzsensor können voneinander unterschiedliche Optiken nutzen, beispielsweise wenn der Referenzsensor und der Vergleichssensor in unterschiedliche Kameras integriert sind. Alternativ ist es auch möglich, zumindest Teile der Optik gemeinsam zu nutzen, was insbesondere ermöglichen kann, dass der durch den Referenzsensor und der durch den Vergleichssensor abgebildete Bildbereich identisch sind. Der Referenzsensor und der Vergleichssensor können derart gekoppelt sein, dass beide Sensoren in einer gemeinsamen Ebene angeordnet sind, die parallel zu den Bildebenen der Sensoren liegt. In diesem Fall sind auch dann, wenn separate Optiken genutzt werden, die erfassten Bildbereiche nur parallel zueinander verschoben. Dies kann im Rahmen der Nutzung und/oder der Bereitstellung der Trainingsdatensätze dadurch kompensiert werden, dass das Eingangsbild und/oder das Referenzbild derart beschnitten werden, dass der gleiche Abbildungsbereich dargestellt wird.

Der Referenzsensor und der Vergleichssensor können sich bezüglich ihrer Empfindlichkeit, insbesondere ihrer Lichtempfindlichkeit, und/oder ihrer Auflösung, insbesondere bezüglich empfangener Lichtintensitäten, und/oder ihrer Sensorfläche und/oder ihres Signal-zu-Rausch-Abstandes zu unterscheiden.

Die genannten Größen sind wesentlich für die erreichbare Bildqualität bei schlechten Lichtverhältnissen. Der Referenzsensor kann somit, insbesondere bezüglich einer oder mehrerer Eigenschaften, die sich auf eine Bildqualität der Bilderfassung bei einer geringen Ausleuchtung der erfassten Szene auswirken, besser als der Vergleichssensor sein.

Wie bereits erwähnt, können der Referenzsensor und der Vergleichssensor eine gemeinsame Optik nutzen. Vorteilhaft ist hierbei, dass in diesem Fall exakt der gleiche Bildbereich abgebildet werden kann. Einfallendes Licht kann in diesem Fall beispielsweise über einen Strahlteiler auf den Referenzsensor und den Vergleichssensor verteilt werden.

Wie erwähnt kann die Qualität des Eingangsbildes gezielt verschlechtert werden, um eine Aufnahme bei schlechten Lichtverhältnissen zu simulieren. Dies kann im Rahmen der Aufnahme beispielsweise dadurch erfolgen, dass im Strahlgang des Vergleichssensors ein Abschwächelement mit reduzierter Lichtdurchlässigkeit angeordnet ist oder dass ein einfallendes Licht durch einen Strahlteiler auf den Referenzsensor und den Vergleichssensor verteilt wird, wobei ein Strahlteiler mit einer ungleichmäßigen Lichtaufteilung verwendet wird. Somit kann dem Vergleichssensor gezielt weniger Licht zugeführt werden, als dem Referenzsensor, wodurch eine Aufnahme bei einer reduzierten Ausleuchtung der erfassten Szene simuliert wird.

Der Vergleichssensor und der Referenzsensor können an einem Kraftfahrzeug angeordnet sein, wobei das Referenzbild und das Eingangsbild für wenigstens einen der Trainingsdatensätze während eines Fahrtriebs des Kraftfahrzeugs aufgenommen werden. Die Aufnahme des Referenzbilds und des Eingangsbilds kann insbesondere während einer Nachtfahrt erfolgen, da bei dieser voraussichtlich relativ häufig unzureichend ausgeleuchtete Szenen erfasst werden, womit derartige Trainingsdatensätze besonders gut dazu geeignet sind, den Verarbeitungsalgorithmus dazu zu trainieren, Qualitätseinbußen aufgrund einer unzureichenden Ausleuchtung zu kompensieren.

Eine Möglichkeit, Trainingsdatensätze zu generieren, die alternativ oder ergänzend genutzt werden kann, ist es, die Eingangsbilder synthetisch zu generieren. Hierzu kann für wenigstens einen der Trainingsdatensätze das Eingangsbild in Abhängigkeit des Referenzbildes ermittelt werden. Vorzugsweise wird das Referenzbild durch den bildgebenden Sensor oder einen anderen Sensor aufgenommen. Anschließend kann die Qualität des Referenzbildes gezielt verschlechtert werden, um ein Eingangsbild zu generieren. Die Modifikationen können derart erfolgen, dass eine Aufnahme bei einer schlechteren Ausleuchtung einer erfassten Szene simuliert wird. Hierzu kann beispielsweise Rauschen zu dem Referenzbild hinzugefügt werden, eine Dynamik des Referenzbildes bzw. eine Auflösung, insbesondere bezüglich erfasster Lichtintensitäten, kann verschlechtert werden und/oder es können Kanten weichgezeichnet werden, um eine Bewegungsunschärfe aufgrund einer längeren Integrations- bzw. Belichtungszeit bei einer Erfassung von Bilddaten bei reduzierter Ausleuchtung der Szene zu simulieren.

Im Rahmen der Erfindung wurde festgestellt, dass es vorteilhaft ist, einen Verarbeitungsalgorithmus zu nutzen, der mehrere in einer Verarbeitungsreihenfolge geordnete Verarbeitungsschichten aufweist, wobei in jeder dieser Verarbeitungsschichten wenigstens ein Teilalgorithmus ausgeführt wird, der jeweils durch wenigstens einen der Verarbeitungsparameter parametrisiert wird, wobei der wenigstens eine Teilalgorithmus der ersten Verarbeitungsschicht von zumindest einem jeweiligen Teil der Rohbilddaten abhängt, wobei der jeweilige wenigstens eine Teilalgorithmus der in der Verarbeitungsreihenfolge folgenden Verarbeitungsschichten von dem wenigstens einem Verarbeitungsergebnis des wenigstens einen Teilalgorithmus in der jeweiligen unmittelbar vorangehenden Verarbeitungsschicht abhängt. Vorzugsweise weist jede der Verarbeitungsschichten mehrere der Teilalgorithmen auf. Vorzugsweise hängt von jedem Bildpunkt der Rohbilddaten wenigstens einer der Teilalgorithmen, vorzugsweise mehrere Teilalgorithmen, die ersten Verarbeitungsschicht ab. Die Teilalgorithmen einer letzten Verarbeitungsschicht können jeweils als Ausgabewert einen oder mehrere Bildpunkte der Ergebnisbilddaten ausgeben. Es ist auch möglich, mehrere Komponenten einzelner Bildpunkte der Ergebnisbilddaten, beispielsweise die Intensitäten verschiedener Farbkanäle, durch separate Teilalgorithmen zu ermitteln.

Bei zumindest Teilen der Teilalgorithmen kann es sich um nicht lineare Funktionen handeln, wobei als Eingangswert der nicht linearen Funktion insbesondere eine gewichtete Summe mehrerer Verarbeitungsergebnisse der unmittelbar vorangehenden Verarbeitungsschicht verwendet werden kann. Der Verarbeitungsalgorithmus kann beispielsweise wenigstens drei, fünf oder sieben Verarbeitungsschichten aufweisen. Allgemein ausgedrückt können als Verarbeitungsalgorithmus sogenannte "Deep Learning" Algorithmen verwendet werden. Diese nutzen einen tiefen Graphen mit mehreren Verarbeitungsschichten, die sich jeweils aus mehreren linearen oder nicht linearen Transformationen zusammensetzen.

Vorzugsweise wird als Verarbeitungsalgorithmus ein künstliches neuronales Netz in Form eines Convolutional Neural Network verwendet. Bei mehrschichtigen künstlichen neuronalen Netzwerken handelt es sich um einen Sonderfall der Deep Learning Algorithmen. Im Rahmen der Erfindung hat sich herausgestellt, dass ein bestimmter Typ tiefer künstlicher neuronaler Netze, nämlich die sogenannten Convolutional Neural Networks zur Qualitätsverbesserung in dem erfindungsgemäßen Verfahren besonders gut geeignet sind. Die Nutzung von Convolutional Neural Networks zur Auswertung von Bilddaten ist im Stand der Technik prinzipiell bekannt und soll daher nur in groben Zügen erläutert werden. Wesentlicher Unterschied zu dem im Stand der Technik üblichen Vorgehen ist, dass im erfindungsgemäßen Verfahren als Ergebnis dieses neuronalen Netzes nicht ein einzelnes Klassifikationsergebnis oder eine bestimmte Position, an der sich ein Objekt in den Bilddaten befindet, ermittelt wird, sondern dass eine Vielzahl von Ausgabewerten generiert wird, nämlich die Ergebnisbilddaten, also eine Vielzahl einzelner Bildpunkte eines Ergebnisbildes. Das neuronale Netz wirkt somit als eine Art Filter auf die durch den Sensor aufgenommenen Rohbilddaten, um ein Ergebnisbild zu generieren.

Ein wesentliches Merkmal eines Convolutional Neural Networks ist es, dass in der ersten Verarbeitungsschicht mehrere Teilalgorithmen verwendet werden, die jeweils Bilddaten von einander überlappenden Bildbereichen auswerten. Die Teilalgorithmen in der nächsten Schicht können wiederum von den Verarbeitungsergebnissen mehrerer dieser Teilalgorithmen abhängen, die jeweils benachbarten bzw. überlappenden Bildbereichen zugeordnet sind. Durch eine Auswertung von Bildbereichen kann die Anzahl der Verknüpfungen im neuronalen Netzwerk reduziert werden. Da die einzelnen ausgewerteten Bildbereiche jedoch überlappen, ist es möglich, in späteren Verarbeitungsschichten auch Merkmale zu erkennen, die sich über mehrere dieser Bildbereiche erstrecken. Ein Convolutional Neural Network kann somit so gestaltet sein, dass frühe Verarbeitungsschichten lokale Merkmale erkennen und späte Verarbeitungsschichten Merkmale auf einer größeren Skala erkennen.

Ein weiteres vorteilhaftes Merkmal von Convolutional Neural Networks ist es, dass zumindest für Teile der Verarbeitungsschichten für die verschiedenen Teilalgorithmen dieser Schicht die gleichen Verarbeitungsparameter genutzt werden, wobei sich die Teilalgorithmen ausschließlich dadurch unterscheiden, von welchen Verarbeitungsergebnissen der vorangehenden Verarbeitungsschicht bzw. von welchem Bildbereich sie abhängen. In der ersten Verarbeitungsschicht können somit auf jeden Bildbereich die gleichen Teilalgorithmen angewandt werden. Dies hat mehrere Vorteile. Die Nutzung gleicher Teilalgorithmen für mehrere Bildbereiche bzw. in späteren Verarbeitungsschichten führt dazu, dass eine Erkennung von Merkmalen in einem Convolutional Neural Network translationsinvariant erfolgen kann. Zudem wird durch die identische Parametrisierung der Teilalgorithmen einer Verarbeitungsebene erreicht, dass die Anzahl der freien Parameter reduziert werden kann, wodurch ein schnelleres und einfacheres Trainieren des Verarbeitungsalgorithmus durch eine entsprechende Parametrisierung ermöglicht wird.

Wie eingangs erläutert, kann das erfindungsgemäße Verfahren insbesondere im Rahmen der Bilddatenverarbeitung in Kraftfahrzeugen genutzt werden. Als bildgebender Sensor kann somit ein bildgebender Sensor eines Kraftfahrzeugs verwendet werden, wobei in Abhängigkeit der Ergebnisbilddaten eine Fahrzeugeinrichtung des Kraftfahrzeugs zur Ausgabe eines Fahrhinweises an einen Fahrer und/oder zur Durchführung eines Fahreingriffs angesteuert wird. Hierzu können die Ergebnisbilddaten einer weiteren Bilddatenverarbeitung zugeführt werden, die beispielsweise zur Objekterkennung und/oder zur Umgebungsinterpretation dient. Beispielsweise können Fahrzeuge und/oder Fahrspurmarkierungen und/oder Verkehrsschilder in den Ergebnisbilddaten erkannt werden. Es ist hierbei auch möglich, dass die Ergebnisbilddaten im Rahmen einer Datenfusion mit weiteren Ego- und/oder Umfelddaten fusioniert werden.

Neben dem erfindungsgemäßen Verfahren betrifft die Erfindung ein Kraftfahrzeug mit einem bildgebenden Sensor zur Erfassung von Rohbilddaten und einer Verarbeitungseinrichtung, wobei die Verarbeitungseinrichtung dazu konfiguriert ist, Ergebnisdaten durch Anwenden des Verarbeitungsalgorithmus auf die Rohbilddaten gemäß dem erfindungsgemäßen Verfahren zu ermitteln und eine Fahrzeugeinrichtung des Kraftfahrzeugs in Abhängigkeit der Ergebnisdaten zur Ausgabe eines Fahrhinweises an einen Fahrer und/oder zur Durchführung eines Fahreingriffs anzusteuern.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ablaufdiagramm eines Ausführungsbeispiels des erfindungsgemäßen Verfahrens,
- Fig. 2: ein Ausführungsbeispiel des erfindungsgemäßen Kraftfahrzeugs, und
- Fig. 3 und 4: zwei Sensoranordnungen zur Ermittlung von Trainingsdatensätzen im Rahmen von Ausführungsbeispielen des erfindungsgemäßen Verfahrens.

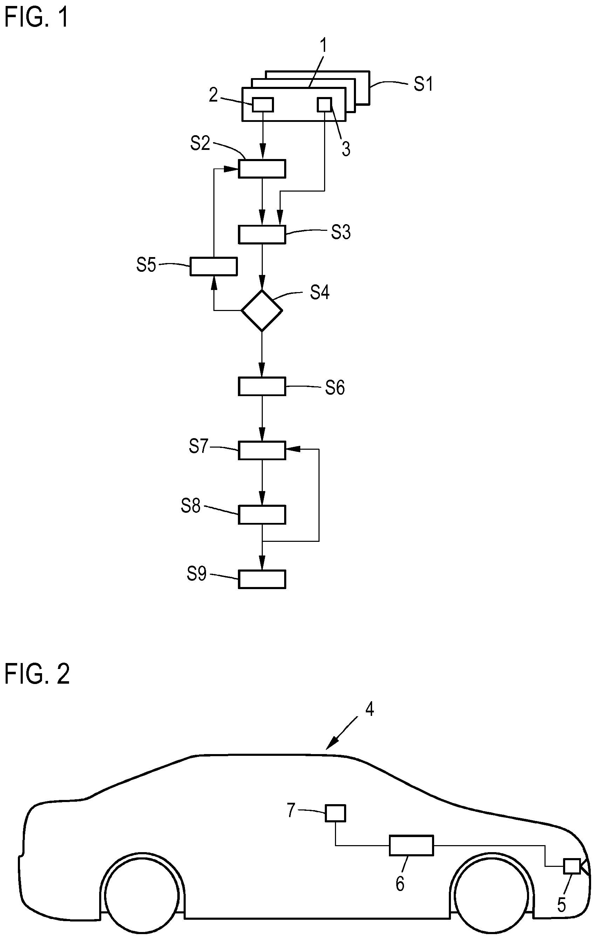

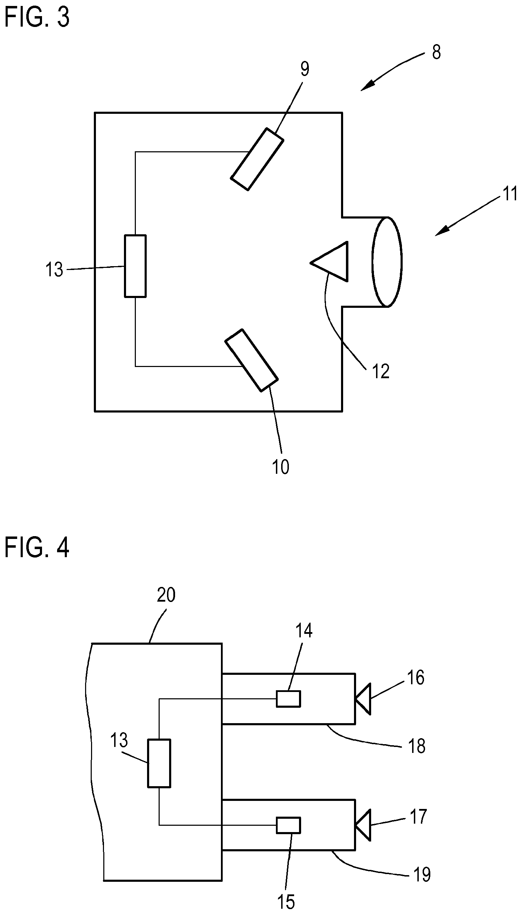

Fig. 1 zeigt ein Ablaufdiagramm eines Verfahrens zur Ermittlung von Ergebnisdaten in einem Kraftfahrzeug, wobei durch einen bildgebenden Sensor Rohbilddaten erfasst und durch einen Verarbeitungsalgorithmus zur Qualitätsverbesserung weiterverarbeitet werden, um die Ergebnisbilddaten zu ermitteln. Der Verarbeitungsalgorithmus wird hierbei durch mehrere Verarbeitungsparameter parametrisiert. Die Parametrisierung erfolgt im Rahmen eines Maschinenlernens, wozu im Schritt S1 mehrere Trainingsdatensätze 1 bereitgestellt werden. Die Trainingsdatensätze umfassen jeweils ein Eingangsbild 2 und ein Referenzbild 3. Die Bereitstellung der Trainingsdatensätze wird später mit Bezug auf Fig. 3 und 4 erläutert werden.

Das Eingangsbild 2 und das Referenzbild 3 bilden jeweils die gleiche Szene aus der gleichen Perspektive ab. Sie unterscheiden sich bezüglich der Schärfe der Abbildung wenigstens eines abgebildeten Objekts und/oder bezüglich eines Bildrauschens und/oder bezüglich eines Kontrasts. Die Unterschied zwischen dem Eingangsbild 2 und dem Referenzbild 3 sind somit Unterschiede, die beispielsweise bei einer Nutzung von qualitativ unterschiedlichen Sensoren oder bei einer unterschiedlichen Belichtung der Szene auftreten können. Die Trainingsdatensätze 1 dienen dazu, den Verarbeitungsalgorithmus derart zu trainieren, dass insbesondere Qualitätsmängel eines erfassten Bildes, die aufgrund einer unzureichenden Beleuchtung der erfassten Szene auftreten können, kompensiert werden können.

In den Schritten S2 bis S5 werden jene Verarbeitungsparameter ermittelt bzw. gelernt, durch die der Verarbeitungsalgorithmus parametrisiert werden soll. Die Parametrisierung soll derart erfolgen, dass für alle Trainingsdatensätze 1 ein jeweiliges Verarbeitungsbild, das durch Anwenden des Verarbeitungsalgorithmus auf das jeweilige Eingangsbild 2 ermittelt wird, möglichst ähnlich zu dem Referenzbild 3 ist. Da das Eingangsbild 2 und das Referenzbild 3 die gleiche Szene zeigen und das Referenzbild, wie vorangehend erläutert, eine bessere Bildqualität aufweist als das Eingangsbild 2, wird somit erreicht, dass der Verarbeitungsalgorithmus derart parametrisiert wird, dass für jegliche aufgenommenen Rohbilddaten, die den Eingangsbildern der Trainingsdatensätze 1 ähneln, eine Qualitätsverbesserung erreicht werden kann.

Bei dem parametrisierten Verarbeitungsalgorithmus kann es sich um ein sogenanntes Convolutional Neural Network handeln. Hierbei handelt es sich um eine Unterklasse der tiefen neuronalen Netze, also der neuronalen Netze, die mehrere Verarbeitungsschichten aufweisen, die zur erläuterten Bilddatenverarbeitung besonders geeignet ist. Der Vorteil einer Nutzung von neuronalen Netzwerken bzw. anderer durch Maschinenlernen angelernter Verarbeitungsalgorithmen gegenüber manuell vorgegebenen bzw. parametrisierten Verarbeitungsalgorithmen ist, dass ein relativ generischer Verarbeitungsalgorithmus genutzt werden kann, zu dessen Entwicklung zunächst keine Kenntnisse erforderlich sind, wie eine entsprechende Bildverbesserung erreicht werden kann. Das Vorwissen, das für eine Parametrisierung erforderlich ist, wird durch die Trainingsdatensätze 1 bereitgestellt und automatisch erlernt. Teilalgorithmen, die in den verschiedenen Verarbeitungsschichten des Verarbeitungsalgorithmus durchgeführt werden, können relativ einfach aufgebaut sein. Beispielsweise können sie an die Funktion einzelner Neuronen angelehnt sein. Dies kann beispielsweise dadurch implementiert werden, dass eine gewichtete Summe mehrerer Eingangsgrößen berechnet wird, bei denen es sich um die Rohbilddaten oder die Ergebnisse anderer Teilalgorithmen, insbesondere vorangehender Verarbeitungsschichten, handeln kann. Die Gewichtungsfaktoren können als Verarbeitungsparameter erlernt werden. Auf diese gewichtete Summe kann vorzugsweise eine nicht lineare Funktion angewandt werden, um beispielsweise das "Schalten" eines Neurons nachzubilden. Das tatsächliche Verarbeitungsergebnis, also die Qualitätsverbesserung, hängt in diesem Fall nahezu ausschließlich von der Parametrisierung ab, die wie im Folgenden erläutert, gelernt werden kann.

Ein Training eines neuronalen Netzes oder eines anderen Verfahrens des Maschinenlernens kann besonders effizient sein, wenn die Eingangsdaten für einzelne Neuronen bzw. Teilalgorithmen bereits derart ausgewählt werden, dass sie an die Struktur des Problems angepasst sind. Zudem sollte die Anzahl der freien Parameter weitgehend reduziert werden. Beides kann bei der erläuterten Bilddatenverarbeitung dadurch erreicht werden, dass ein Convolutional Neural Network als Verarbeitungsalgorithmus gewählt und parametrisiert wird, da dieses übliche Eigenschaften einer Bilddatenverarbeitung, beispielsweise eine Translationsinvarianz von Merkmalen und die Erkennung von Merkmalen auf verschiedenen Skalen, aufgrund seiner Struktur besonders effizient implementieren kann.

Im Rahmen des Lernens der Verarbeitungsparameter wird zunächst auf das Eingangsbild 2 jedes der Trainingsdatensätze 1 in Schritt S2 der Verarbeitungsalgorithmus mit einer anfänglichen Parametrisierung angewandt. Das resultierende Verarbeitungsbild wird in Schritt S3 mit dem Referenzbild 3 verglichen, um ein Maß für die Unterschiede zwischen dem jeweiligen Verarbeitungsbild und dem jeweiligen Referenzbild 3, also eine Kostenfunktion, zu ermitteln. Das Maß für den Unterschied kann hierbei beispielsweise Unterschiede der Helligkeit bzw. Unterschiede in den Farbwerten einzelner Bildpunkte des Referenzbildes und des Verarbeitungsbildes als Unterschiedsgrößen auswerten. Die verschiedenen Unterschiedsgrößen könnten als Abstände in den verschiedenen Dimensionen betrachtet werde, wobei als Maß für den Gesamtunterschied eine 1-Norm, auch Manhattan-Norm genannt, also eine Summe der Unterschiedsgrößen, oder eine 2-Norm, auch Euklidische-Norm genannt, bei der eine Quadratwurzel der Summe der Quadrate der Unterschiedsgrößen berechnet wird, ermittelt werden kann. Insbesondere erfolgt die Summation hierbei jeweils über die Bildpunkte aller Trainingsdatensätze.

In Schritt S4 wird ermittelt, ob die Parameteroptimierung konvergiert. Hierzu kann beispielsweise überprüft werden, ob der Unterschied von in aufeinanderfolgenden Durchläufen ermittelten Kostenfunktionen in Schritt S3 einen Grenzwert unterschreitet. Ist dies nicht der Fall, so werden in Schritt S5 die Verarbeitungsparameter angepasst und die Schritte S2 bis S4 werden anschließend mit den angepassten Verarbeitungsparametern wiederholt. Zur Anpassung der Verarbeitungsparameter kann ein Gradientenverfahren genutzt werden. Hierzu kann eine Ableitung der in Schritt S3 berechneten Kostenfunktion nach den Verarbeitungsparametern berechnet werden, um eine Variationsrichtung zu ermitteln, für die Kostenfunktion sinkt, vorzugsweise die Richtung des steilsten Abstiegs.

Wurde in Schritt S4 ermittelt, dass das Optimierungsverfahren bereits konvergiert ist, so werden die zuletzt in Schritt S3 genutzten Verarbeitungsparameter in Schritt S6 als gelernte bzw. endgültige Verarbeitungsparameter festgelegt. Soll der Verarbeitungsalgorithmus beispielsweise in einer Vielzahl von Kraftfahrzeugen genutzt werden, können die Schritte S1 bis S5 zumindest für all jene Kraftfahrzeuge, die den gleichen bildgebenden Sensor nutzen, gemeinsam durchgeführt werden. In Schritt S6 kann der Verarbeitungsalgorithmus für alle diese Kraftfahrzeuge durch die ermittelten Verarbeitungsparameter parametrisiert werden.

Die Nutzung des entsprechenden parametrisierten Verarbeitungsalgorithmus erfolgt in den Schritten S7 bis S9. Diese werden im Folgenden für ein Beispiel beschrieben, in dem das erläuterte Verfahren in einem Kraftfahrzeug genutzt wird. Selbstverständlich sind auch andere Anwendungsfälle möglich.

In Schritt S7 werden durch einen bildgebenden Sensor, insbesondere eine Kamera, des Kraftfahrzeugs Rohbilddaten erfasst. Hierbei kann beispielsweise eine ungenügend ausgeleuchtete Szene erfasst werden, so dass diese Rohbilddaten beispielsweise einen geringen Kontrast aufweisen und/oder stark verrauscht sein können. In Schritt S8 wird der durch die zuvor ermittelten Verarbeitungsparameter parametrisierte Verarbeitungsalgorithmus auf diese Rohbilddaten angewandt, um Ergebnisbilddaten zu ermitteln. Da der Verarbeitungsalgorithmus durch die Trainingsdatensätze 1 gezielt dazu trainiert wurde, die Bildqualität von Bilddaten des bildgebenden Sensors zu verbessern, insbesondere wenn diese bei einer unzureichenden Beleuchtung aufgenommen wurden, weisen die Ergebnisbilddaten, insbesondere bezüglich ihres Bildrauschens bzw. ihres Kontrasts, eine bessere Bildqualität auf als die ursprünglich erfassten Rohbilddaten.

Die Ergebnisbilddaten werden anschließend in Schritt S9 weiterverarbeitet, beispielsweise um Objekte im Kraftfahrzeugumfeld zu erkennen oder die Umgebung zu interpretieren. Beispielsweise können Fahrzeuge und/oder Fahrspuren in den Ergebnisbilddaten erkannt werden. In Abhängigkeit des Verarbeitungsergebnisses kann eine Fahrzeugeinrichtung angesteuert werden, um dem Fahrer einen Fahrhinweis zu geben und/oder in den Fahrbetrieb einzugreifen. Beispielsweise können ein automatischer Spurführungsassistent und/oder eine Assistenzfunktion, die einen Fahrer auf weitere Verkehrsteilnehmer hinweist, die Ergebnisbilddaten auswerten.

Fig. 2 zeigt ein Kraftfahrzeug 4, das einen bildgebenden Sensor 5 und eine Verarbeitungseinrichtung 6 aufweist. Das Kraftfahrzeug 4 kann an dem vorangehend erläuterten Verfahren teilnehmen, wobei insbesondere die Schritte S7 bis S9 durchgeführt werden können, indem der bildgebende Sensors Rohbilddaten erfasst und durch die Verarbeitungseinrichtung 6 Ergebnisdaten durch Anwenden des wie vorangehend erläutert parametrisierten Verarbeitungsalgorithmus auf die Rohbilddaten ermittelt werden. In Abhängigkeit der Ergebnisbilddaten kann die Verarbeitungseinrichtung 6 die Fahrzeugeinrichtung 7 ansteuern. Hierbei kann es sich beispielsweise um eine Anzeigeeinrichtung handeln, über die ein Fahrhinweis an einen Fahrer ausgegeben werden kann. Alternativ wäre es möglich, dass die Fahrzeugeinrichtung 7 ein Aktor ist, durch dessen Ansteuerung in den Fahrbetrieb eingegriffen werden kann, beispielsweise ein Aktor, der den Bremsen oder der Lenkung zugeordnet ist.

Wie zur Fig. 1 erläutert, wird der Verarbeitungsalgorithmus durch Trainingsdatensätze 1 im Rahmen eines Maschinenlernens trainiert. Zur Erfassung entsprechender Trainingsdatensätze 1 kann beispielsweise die in Fig. 3 gezeigte Erfassungseinrichtung 8 genutzt werden. Die Erfassungseinrichtung 8 umfasst einen Referenzsensor 9 zur Erfassung der Bilddaten des Referenzbildes 3 und einen Vergleichssensor 10 zur Erfassung von Bilddaten des Eingangsbildes 2 für den jeweiligen Trainingsdatensatz 1. Als Vergleichssensor 10 kann beispielsweise der gleiche Sensorchip genutzt werden, der auch in dem bildgebenden Sensor 5, des Kraftfahrzeugs 4 genutzt wird. Der Verarbeitungsalgorithmus kann somit unter Berücksichtigung des tatsächlich zur Bilddatenerfassung genutzten Sensors trainiert werden. Der Referenzsensor 9 ist ein Sensor, der gegenüber dem Vergleichssensor 10 eine Bilddatenerfassung mit höherer Bildqualität ermöglicht, insbesondere dann, wenn eine erfasste Szene nicht ausreichend beleuchtet ist. Beispielsweise kann der Referenzsensor 9 eine größere Sensorfläche aufweisen oder es kann sich bei dem Referenzsensor 9 um eine Weiterentwicklung des Vergleichssensors 10 handeln, die noch nicht im Kraftfahrzeug 4 genutzt wird. Durch die Steuereinrichtung 13 der Erfassungseinrichtung 8 werden der Referenzsensor 9 und der Vergleichssensor 10 derart angesteuert, dass sie im Wesentlichen zeitgleich ein Referenzbild 3 und ein Eingangsbild 2 für einen jeweiligen Trainingsdatensatz 1 ermitteln, der anschließend durch die Steuereinrichtung 13 gespeichert wird. Zur Bilderfassung durch beide Sensoren wird eine gemeinsame Optik 11 genutzt. Somit ist der Erfassungsbereich des Referenzsensors 9 und des Vergleichssensors 10 gleich. Das über die gemeinsame Optik 11 einfallende Licht wird durch den Strahlteiler 12 auf den Referenzsensor 9 und den Vergleichssensor 10 gleichmäßig verteilt.

In einer alternativen Ausführungsform der Erfassungseinrichtung 8 wäre es möglich, dass der Referenzsensor 9 und der Vergleichssensor 10 im Wesentlichen gleich sind, wobei dem Referenzsensor 9 insgesamt mehr Licht zugeführt wird als dem Vergleichssensor 10. Beispielsweise kann im Lichtpfad des Vergleichssensors 10 ein Abschwächelement mit einer reduzierten Lichtdurchlässigkeit vorgesehen sein oder der Strahlteiler 12 kann derart ausgebildet sein, dass ein über die gemeinsame Optik 11 einfallendes Licht ungleichmäßig auf den Referenzsensor 11 und den Vergleichssensor 10 verteilt wird.

In einigen Fällen kann es auch vorteilhaft sein, das Referenzbild und das Eingangsbild durch einen Referenzsensor 14 und einen Vergleichssensor 15 zu erfassen, denen separate Optiken 16, 17 zugeordnet sind, wie dies in Fig. 4 dargestellt ist. Hierbei können beispielsweise zwei Kameras 18, 19 starr mit der Karosserie 20 eines nicht gezeigten Kraftfahrzeugs verbunden sein. Beispielsweise kann das Kraftfahrzeug 4 genutzt werden und die Kamera 19 kann mit dem bildgebenden Sensor 5 identisch sein. Die Kamera 18 kann derart ausgebildet sein, dass eine höhere Bildqualität erreicht wird, ihr Einbau in das Kraftfahrzeug 4 jedoch nicht zweckmäßig ist, da sie beispielsweise einen sehr großen Bauraum einnehmen würde oder sehr teuer ist. Durch die Nutzung der qualitativ hochwertigen Kamera 18 zum Trainieren eines Verarbeitungsalgorithmus, der anschließend die Bilder der Kamera 19 bzw. des bildgebenden Sensors 5 weiterverarbeitet, können dennoch, insbesondere auch bei schlechten Lichtverhältnissen, Ergebnisbilddaten bereitgestellt werden, die eine hohe Qualität aufweisen.

Eine Möglichkeit dafür, mit geringem Aufwand eine Vielzahl von Trainingsdatensätzen bereitzustellen, ist es, mit einem Kraftfahrzeug, das die Erfassungseinrichtung 8 oder die Kameras 18, 19 aufweist, insbesondere nachts oder bei anderweitig schlechten Lichtverhältnissen verschiedene Strecken abzufahren und hierbei, beispielsweise in vorgegebenen Intervallen, jeweils ein Eingangsbild 2 und ein Referenzbild 3 für jeweils einen Trainingsdatensatz 1 zu erfassen. Somit ermöglicht es das erfindungsgemäße Verfahren mit geringem Aufwand eine Vielzahl von Trainingsdatensätzen zu generieren und somit eine qualitativ hochwertige Parametrisierung des Verarbeitungsalgorithmus zu erreichen. Eine Qualitätsverbesserung von erfassten Bilddaten ist somit mit geringem technischen Aufwand und mit geringem Entwicklungsaufwand möglich. Werden die Ergebnisbilddaten im Rahmen von Fahrerassistenzsystemen weiterverarbeitet, steigt somit auch die Robustheit und Zuverlässigkeit dieser Fahrerassistenzsysteme.

In einer nicht dargestellten Alternative zur Erfassung von Trainingsdatensätzen ist es auch möglich, ausschließlich Referenzbilder 3 zu erfassen oder anderweitig bereitzustellen und aus diesen allein durch Datenverarbeitung die zugeordneten Eingangsbilder 2 der jeweiligen Trainingsdatensätze 1 zu generieren. Beispielsweise kann ein Kontrast künstlich gesenkt oder ein Bildrauschen künstlich erhöht werden.

## Patentansprüche

1. Verfahren zur Ermittlung von Ergebnisbilddaten wobei durch einen bildgebenden Sensor (5) Rohbilddaten erfasst werden, wonach diese durch einen Verarbeitungsalgorithmus zur Qualitätsverbesserung weiterverarbeitet werden, um die Ergebnisbilddaten zu ermitteln, wobei der Verarbeitungsalgorithmus durch mehrere Verarbeitungsparameter parametrisiert wird, die ermittelt werden, indem der Verarbeitungsalgorithmus durch mehrere Trainingsdatensätze (1) im Rahmen eines Maschinenlernens trainiert wird, wobei die Trainingsdatensätze (1) jeweils ein Eingangsbild (2) und ein Referenzbild (3) umfassen, wobei im Rahmen des Maschinenlernens ein Maß für die Abweichung von Verarbeitungsbildern, die durch Anwenden des Verarbeitungsalgorithmus auf das Eingangsbild (2) eines jeweiligen Trainingsdatensatzes (1) ermittelt werden, von den jeweiligen Referenzbildern (3) minimiert wird,
**dadurch gekennzeichnet,**
**dass** für wenigstens einen der Trainingsdatensätze (1) die Bilddaten des Referenzbildes (3) mit einem Referenzsensor (9, 14) und die Bilddaten des Eingangsbildes (2) mit einem starr mit dem Referenzsensor (9, 14) gekoppelten Vergleichssensor (10, 15) aufgenommen werden, wobei entweder das Eingangsbild (2) und das Referenzbild (3) die gleiche Szene aus der gleichen Perspektive abbilden, oder wobei der Vergleichssensor (15) und der Referenzsensor (14) voneinander unterschiedliche Optiken (16, 17) nutzen, wobei die erfassten Bildbereiche parallel zueinander verschoben sind, wobei dies im Rahmen der Nutzung und/oder der Bereitstellung der Trainingsdatensätze (1) dadurch kompensiert wird, dass das Eingangsbild (2) und/oder das Referenzbild (3) derart beschnitten werden, dass der gleiche Abbildungsbereich dargestellt wird.

2. Verfahren nach Anspruch 1,
**dadurch gekennzeichnet,**
**dass** sich jedes Referenzbild (3) von dem Eingangsbild (2) des gleichen Trainingsdatensatzes (1) bezüglich der Schärfe der Abbildung wenigstens eines Objekts und/oder des Bildrauschens und/oder des Kontrasts unterscheidet.

3. Verfahren nach einem der vorangehenden Ansprüche,
**dadurch gekennzeichnet,**
**dass** der Vergleichssensor (10, 15) baugleich zu dem bildgebenden Sensor (5) ist.

4. Verfahren nach einem der vorangehenden Ansprüche,
**dadurch gekennzeichnet,**
**dass** sich der Referenzsensor (9, 14) und der Vergleichssensor (10, 15) bezüglich ihrer Empfindlichkeit und/oder ihrer Auflösung und/oder ihrer Sensorfläche und/oder ihres Signal-zu-Rausch-Abstandes unterscheiden.

5. Verfahren nach einem der vorangehenden Ansprüche,
**dadurch gekennzeichnet,**
**dass** der Referenzsensor (9, 14) und der Vergleichssensor (10, 15) eine gemeinsame Optik (11) nutzen.

6. Verfahren nach einem der vorangehenden Ansprüche,
**dadurch gekennzeichnet,**
**dass** im Strahlengang des Vergleichssensors (10) ein Abschwächelement mit einer reduzierten Lichtdurchlässigkeit angeordnet ist oder dass ein einfallendes Licht durch einen Strahlteiler (12) auf den Referenzsensor (9) und den Vergleichssensor (10) verteilt wird, wobei ein Strahlteiler (12) mit einer ungleichmäßigen Lichtaufteilung verwendet wird.

7. Verfahren nach einem der vorangehenden Ansprüche,
**dadurch gekennzeichnet,**
**dass** der Vergleichssensor (10, 15) und der Referenzsensor (9, 14) an einem Kraftfahrzeug (4) angeordnet sind, wobei das Referenzbild (3) und das Eingangsbild (2) für wenigstens einen der Trainingsdatensätze (1) während eines Fahrbetriebs des Kraftfahrzeugs (4) aufgenommen werden.

8. Verfahren nach einem der vorangehenden Ansprüche,
**dadurch gekennzeichnet,**
**dass** für wenigstens einen der Trainingsdatensätze (1) das Eingangsbild (2) in Abhängigkeit des Referenzbildes (3) ermittelt wird.

9. Verfahren nach einem der vorangehenden Ansprüche,
**dadurch gekennzeichnet,**
**dass** der Verarbeitungsalgorithmus mehrere in einer Verarbeitungsreihenfolge geordnete Verarbeitungsschichten aufweist, wobei in jeder dieser Verarbeitungsschichten wenigstens ein Teilalgorithmus ausgeführt wird, der jeweils durch wenigstens einen der Verarbeitungsparameter parametrisiert wird, wobei der wenigstens eine Teilalgorithmus der ersten Verarbeitungsschicht von zumindest einem jeweiligen Teil der Rohbilddaten abhängt, wobei der jeweilige wenigstens eine Teilalgorithmus der in der Verarbeitungsreihenfolge folgenden Verarbeitungsschichten von dem wenigstens einen Verarbeitungsergebnis des wenigstens einen Teilalgorithmus in der jeweiligen unmittelbar vorangehenden Verarbeitungsschicht abhängt.

10. Verfahren nach einem der vorangehenden Ansprüche,
**dadurch gekennzeichnet,**
**dass** als der Verarbeitungsalgorithmus ein künstliches neuronales Netz in Form eines Convolutional Neural Network verwendet wird.

11. Verfahren nach einem der vorangehenden Ansprüche,
**dadurch gekennzeichnet,**
**dass** als bildgebender Sensor (5) ein bildgebender Sensor (5) eines Kraftfahrzeugs (4) verwendet wird, wobei in Abhängigkeit der Ergebnisbilddaten eine Fahrzeugeinrichtung (7) des Kraftfahrzeugs (4) zur Ausgabe eines Fahrhinweises an einen Fahrer und/oder zur Durchführung eines Fahreingriffs angesteuert wird.

12. Kraftfahrzeug mit einem bildgebenden Sensor (5) zur Erfassung von Rohbilddaten und einer Verarbeitungseinrichtung (6),
**dadurch gekennzeichnet,**
**dass** die Verarbeitungseinrichtung dazu konfiguriert ist, Ergebnisdaten durch Anwenden des Verarbeitungsalgorithmus auf die Rohbilddaten gemäß dem Verfahren nach einem der vorangehenden Ansprüche zu ermitteln und eine Fahrzeugeinrichtung (7) des Kraftfahrzeugs (4) in Abhängigkeit der Ergebnisdaten zur Ausgabe eines Fahrhinweises an einen Fahrer und/oder zur Durchführung eines Fahreingriffs anzusteuern.

## Claims

1. Method for the determination of output image data, wherein raw image data is acquired by an imaging sensor (5), after which it is further processed by a processing algorithm for quality improvement in order to determine the output image data, wherein the processing algorithm is parameterised by a plurality of processing parameters which are determined by training the processing algorithm by a plurality of training data sets (1) as part of machine learning, wherein the training data sets (1) each comprise an input image (2) and a reference image (3), wherein as part of the machine learning, a measure for the deviation of processing images, which are determined by the application of the processing algorithm to the input image (2) of a respective training data set (1), from the respective reference images (3), is minimised;
**characterised in that**,
for at least one of the training data sets (1), the image data of the reference image (3) is recorded with a reference sensor (9, 14) and the image data of the input image (2) is recorded with a comparison sensor (10, 15) rigidly coupled to the reference sensor (9, 14), wherein either the input image (2) and the reference image (3) display the same scene from the same perspective, or wherein the comparison sensor (15) and the reference sensor (14) use optical systems (16, 17) which are different from one another, wherein the detected image areas are displaced parallel to one another, wherein this is compensated in the context of the use and/or preparation of the training data sets (1) by the input image (2) and/or the reference image (3) is cropped in such a way that the same imaging region is represented.

2. Method according to claim 1,
**characterised in that**,
each reference image (3) differs from the input image (2) of the same training data set (1) with respect to the sharpness of the image of at least one object and/or the image noise and/or the contrast.

3. Method according to any of the preceding claims,
**characterised in that**
the comparison sensor (10, 15) is identical in construction to the imaging sensor (5).

4. Method according to any of the preceding claims,
**characterised in that**
the reference sensor (9, 14) and the comparison sensor (10, 15) differ with respect to their sensitivity and/or their resolution and/or their sensor area and/or their signal-to-noise ratio.

5. Method according to any of the preceding claims,
**characterised in that**
the reference sensor (9, 14) and the comparison sensor (10, 15) use a common optical system (11).

6. Method according to any of the preceding claims,
**characterised in that**
an attenuating element with a reduced light transmission is arranged in the beam path of the comparison sensor (10) or **in that** an incident light is distributed through a beam splitter (12) between the reference sensor (9) and the comparison sensor (10), wherein a beam splitter (12) with an uneven light distribution is used.

7. Method according to any of the preceding claims,
**characterised in that**
the comparison sensor (10, 15) and the reference sensor (9, 14) are arranged on a motor vehicle (4), wherein the reference image (3) and the input image (2) for at least one of the training data sets (1) are recorded during a driving operation of the motor vehicle (4).

8. Method according to any of the preceding claims,
**characterised in that**,
for at least one of the training data sets (1), the input image (2) is determined as a function of the reference image (3).

9. Method according to any of the preceding claims,
**characterised in that**
the processing algorithm has a plurality of processing layers arranged in a processing sequence, wherein at least one partial algorithm is executed in each of these processing layers, which partial algorithm is parameterised in each case by at least one of the processing parameters, wherein the at least one partial algorithm of the first processing layer being dependent on at least a respective part of the raw image data, wherein the respective at least one partial algorithm of the processing layers following in the processing sequence is dependent on the at least one processing result of the at least one partial algorithm in the respective immediately preceding processing layer.

10. Method according to any of the preceding claims,
**characterised in that**
an artificial neural network in the form of a convolutional neural network is used as the processing algorithm.

11. Method according to any of the preceding claims,
**characterised in that**
an imaging sensor (5) of a motor vehicle (4) is used as the imaging sensor (5), wherein a vehicle device (7) of the motor vehicle (4) for the outputting of a driving instruction to a driver and/or for the execution of a driving intervention is controlled as a function of the output image data.

12. Motor vehicle having an imaging sensor (5) for recording raw image data and a processing device (6),
**characterised in that**
the processing device is configured to determine result data by application of the processing algorithm to the raw image data in accordance with the method according to any of the preceding claims and to control a vehicle device (7) of the motor vehicle (4) as a function of the result data for the outputting of a driving instruction to a driver and/or for the execution of a driving intervention.

## Revendications

1. Procédé de détermination de données d'image de résultat, dans lequel des données d'image brutes sont acquises grâce à un capteur d'imagerie (5) puis sont retraitées pour amélioration qualitative grâce à un algorithme de traitement afin de déterminer les données d'image de résultat, dans lequel l'algorithme de traitement est paramétré grâce à plusieurs paramètres de traitement déterminés en soumettant l'algorithme de traitement à un apprentissage automatique grâce à plusieurs ensembles de données d'apprentissage (1), dans lequel les ensembles de données d'apprentissage (1) comprennent respectivement une image d'entrée (2) et une image de référence (3), dans lequel, dans le cadre de l'apprentissage automatique, une mesure de la déviation des images de traitement déterminées par application de l'algorithme de traitement à l'image d'entrée (2) d'un ensemble de données d'apprentissage (1) respectif est minimisée par les images de référence (3) respectives,
**caractérisé en ce que**
pour au moins un des ensembles de données d'apprentissage (1), les données d'image de l'image de référence (3) sont enregistrées par un capteur de référence (9, 14) et les données d'image de l'image d'entrée (2) sont enregistrées par un capteur de comparaison (10, 15) couplé de manière rigide au capteur de référence (9, 14), dans lequel l'image d'entrée (2) et l'image de référence (3) représentent l'une comme l'autre la même scène avec la même perspective, ou dans lequel le capteur de comparaison (15) et le capteur de référence (14) utilisent des optiques (16, 17) différentes l'une de l'autre, dans lequel les régions d'image capturées sont déplacées les unes par rapport aux autres, dans lequel ceci est compensé dans le cadre de l'utilisation et/ou de la fourniture des ensembles de données d'apprentissage (1) en rognant l'image d'entrée (2) et/ou l'image de référence (3) de telle manière que la même région d'imagerie est représentée.

2. Procédé selon la revendication 1,
**caractérisé en ce que**
chaque image de référence (3) se différencie de l'image d'entrée (2) du même ensemble de données d'apprentissage (1) par la netteté de la représentation d'au moins un objet et/ou le bruit d'image et/ou le contraste.

3. Procédé selon l'une quelconque des revendications précédentes,
**caractérisé en ce que**
le capteur de comparaison (10, 15) est de construction identique au capteur d'imagerie (5).

4. Procédé selon l'une quelconque des revendications précédentes,
**caractérisé en ce que**
le capteur de référence (9, 14) et le capteur de comparaison (10, 15) se différencient par leur sensibilité et/ou leur résolution et/ou leur surface de capteur et/ou leur rapport signal/bruit.

5. Procédé selon l'une quelconque des revendications précédentes,
**caractérisé en ce que**
le capteur de référence (9, 14) et le capteur de comparaison (10, 15) utilisent une optique commune (11).

6. Procédé selon l'une quelconque des revendications précédentes,
**caractérisé en ce que**
un élément d'atténuation est agencé dans le trajet de rayon du capteur de comparaison (10) avec une transmission de lumière réduite ou **en ce qu'**une lumière incidente est répartie sur le capteur de référence (9) et le capteur de comparaison (10) grâce à un séparateur de faisceau (12), dans lequel un séparateur de faisceau (12) présentant une répartition inégale de la lumière est utilisé.

7. Procédé selon l'une quelconque des revendications précédentes,
**caractérisé en ce que**
le capteur de comparaison (10, 15) et le capteur de référence (9, 14) sont agencés au niveau d'un véhicule à moteur (4), dans lequel l'image de référence (3) et l'image d'entrée (2) pour au moins un des ensembles de données d'apprentissage (1) sont enregistrées pendant une opération de conduite du véhicule à moteur (4).

8. Procédé selon l'une quelconque des revendications précédentes,
**caractérisé en ce que**
l'image d'entrée (2) est déterminée en fonction de l'image de référence (3) pour au moins un des ensembles de données d'apprentissage (1).

9. Procédé selon l'une quelconque des revendications précédentes,
**caractérisé en ce que**
l'algorithme de traitement présente plusieurs couches de traitement agencées dans un ordre de traitement, dans lequel au moins un sous-algorithme, respectivement paramétré grâce à au moins un des paramètres de traitement, est exécuté au sein de chacune desdites couches de traitement, dans lequel le au moins un sous-algorithme de la première couche de traitement dépend d'au moins une partie respective des données d'image brutes, dans lequel le respectivement au moins un sous-algorithme respectif des couches de traitement suivantes dans l'ordre de traitement dépend du au moins un résultat de traitement du au moins un sous-algorithme dans la couche de traitement immédiatement précédente respective.

10. Procédé selon l'une quelconque des revendications précédentes,
**caractérisé en ce que**
un réseau neuronal artificiel sous la forme d'un réseau neuronal à convolution est utilisé en tant qu'algorithme de traitement.

11. Procédé selon l'une quelconque des revendications précédentes,
**caractérisé en ce que**
un capteur d'imagerie (5) d'un véhicule à moteur (4) est utilisé en tant que capteur d'imagerie (5), dans lequel, en fonction des données d'image de résultat, un dispositif de véhicule (7) du véhicule à moteur (4) reçoit la commande de fournir une instruction de conduite à un conducteur et/ou d'intervenir sur la conduite.

12. Véhicule à moteur avec un capteur d'imagerie (5) destiné à acquérir des données d'image brutes et un dispositif de traitement (6),
**caractérisé en ce que**
le dispositif de traitement est configuré pour déterminer des données de résultat grâce à l'application de l'algorithme de traitement aux données d'image brutes conformément au procédé selon l'une quelconque des revendications précédentes et, en fonction des données de résultat, pour commander à un dispositif de véhicule (7) du véhicule à moteur (4) de fournir une instruction de conduite à un conducteur et/ou d'intervenir sur la conduite.
